# EUROPÄISCHE PATENTANMELDUNG

(11) **EP 4 173 862 A1**
(43) Veröffentlichungstag der Anmeldung: **03.05.2023**
(21) Anmeldenummer: 21204752.6
(22) Anmeldetag: 26.10.2021
(51) Int. Cl.: B60K 1/02, B60K 7/00

(54) **FAHRZEUG MIT KNICKGELENK**

(71) Anmelder: Siemens Aktiengesellschaft, 80333 München (DE)
(72) Erfinder: Bachmann, Christian, 80686 München (DE); Bergmann, Dominik, 83679 Sachsenkam (DE); Gerlich, Matthias, 80636 München (DE); Mantel, Mirjam, 85540 Haar (DE); Mose, Christian, 81476 München (DE); Pais, Guillaume, 81667 München (DE); Röhrl, Verena, 81241 München (DE)
(74) Vertreter: Siemens Patent Attorneys

(57) **Zusammenfassung**

Es wird ein Fahrzeug (1) mit wenigstens zwei angetriebenen Wagenelementen (100,200) angegeben, welche durch wenigstens ein Knickgelenk (k) verschwenkbar miteinander verbunden sind, - wobei diese beiden angetriebenen Wagenelemente (100,200) jeweils wenigstens zwei Räder (110,210) aufweisen, welche jeweils durch einen zugeordneten Motor (3) separat antreibbar sind.

## Beschreibung

Die vorliegende Erfindung betrifft ein Fahrzeug mit wenigstens zwei Wagenelementen, welche durch ein Knickgelenk verschwenkbar miteinander verbunden sind.

Aus dem Stand der Technik sind verschiedene Nutzfahrzeuge bekannt, bei welchen zwei Wagenelemente durch ein Knickgelenk verbunden sind. Die einzelnen Wagenelemente können dabei jeweils ein oder mehrere Fahrzeugachsen mit darauf angeordneten Rädern aufweisen, so dass das Knickgelenk zwischen den Achsen des Fahrzeugs angeordnet ist. So werden beispielsweise von Volvo CE, von Caterpillar, Komatsu und einigen anderen Unternehmen knickgelenkte Muldenkipper angeboten, und "Toyota Material Handling Deutschland" hat mehrere Hochregalstapler mit Knickgelenk-Chassis im Programm. Mit solchen innenliegenden Knickgelenken können sehr enge Kurvenradien und damit gute Manövrierfähigkeiten erreicht werden.

Bei diesen Fahrzeugen ist typischerweise nur eines der beiden Wagenelemente angetrieben, und das andere wird passiv mitbewegt. Es können auch beide Wagenelement aktiv angetrieben sein, wobei die Antriebskräfte dann trotzdem meist von einem zentralen Motor über Kardanwellen und Differentiale an die einzelnen Räder weitergeleitet werden. Die Aktuierung des Knickgelenks erfolgt dabei meist hydraulisch, so dass eine von dem Fahrzeugantrieb getrennte Steuerung des Knickwinkels möglich ist. Hierzu ist nach dem Stand der Technik typischerweise ein zusätzlicher hydraulischer Stellantrieb vorgesehen.

Nachteilig bei den Knickgelenk-Fahrzeugen nach dem Stand der Technik ist, dass der hydraulische Aktor für das Knickgelenk zusätzliche Motorleistung benötigt und daher der Gesamt-Wirkungsgrad des Fahrzeugs beeinträchtigt ist. Der zusätzliche Aktor kann auch zu einer erhöhten Fehleranfälligkeit und einem erhöhten Wartungsaufwand des Fahrzeugs führen.

Aufgabe der Erfindung ist es daher, ein Fahrzeug anzugeben, welches die genannten Nachteile überwindet. Insbesondere soll ein Knickgelenk-Fahrzeug zur Verfügung gestellt werden, welches vergleichsweise einfach aufgebaut ist, robust ist und einen hohen Wirkungsgrad aufweisen kann.

Diese Aufgaben werden durch das in Anspruch 1 beschriebene Fahrzeug gelöst. Das erfindungsgemäße Fahrzeug weist wenigstens zwei angetriebene Wagenelemente auf, welche durch wenigstens ein Knickgelenk verschwenkbar miteinander verbunden sind. Diese beiden angetriebenen Wagenelemente weisen jeweils wenigstens zwei Räder auf, welche jeweils durch einen zugeordneten Motor separat antreibbar sind.

Das Knickgelenk ermöglicht insbesondere ein horizontales Verschwenken der verbundenen Wagenelemente innerhalb der Fortbewegungsebene. Mit anderen Worten kann die Knickachse des Knickgelenks im Wesentlichen senkrecht zu dieser Haupt-Fortbewegungsebene stehen. Dabei soll jedoch nicht ausgeschlossen sein, dass das Knickgelenk auch eine zusätzliche Verschwenkung um eine weitere Achse ermöglicht. So kann an dem eigentlichen Knickgelenk mit vertikaler Knickachse beispielsweise ein weiteres Gelenk angelagert sein, welches eine Verwindung zwischen den beiden Wagenelementen erlaubt, die aus der Haupt-Fortbewegungsebene herausführt. Dies ist insbesondere für den Einsatz im unebenen Gelände vorteilhaft. Wesentlich im Zusammenhang mit der vorliegenden Erfindung ist aber vor allem die Möglichkeit der Verschwenkung der beiden Wagenelemente innerhalb der Haupt-Fortbewegungsebene und die damit verbundene hohe Manövrierfähigkeit.

Die durch das Knickgelenk verbundenen Wagenelemente sind gemäß der Erfindung beide separat angetrieben, und zwar jeweils durch wenigstens zwei separat angetriebene Räder. Die durch das Knickgelenk verbundenen Wagenelemente können insbesondere jeweils zweispurig sein. So kann jedes Wagenelement zumindest zwei Räder aufweisen, welche bezüglich der Haupt-Fortbewegungsrichtung nebeneinander angeordnet sind. Ganz allgemein kann es sich bei dem Fahrzeug jedenfalls um ein flurgebundenes Fahrzeug handeln.

Ein wesentlicher Vorteil des erfindungsgemäßen Fahrzeugs liegt darin, dass durch die separaten Antriebe der einzelnen Räder zu beiden Seiten des Knickgelenks (also davor und dahinter) auch eine Steuerung des Knickwinkels ermöglicht wird. Dadurch, dass jedes der beiden Wagenelemente zumindest zwei separat angetriebene Räder umfasst, liegen insgesamt zumindest vier separat angetriebene Räder vor. Dies sind wesentlich mehr separate Antriebe, als für die reine Fortbewegung des Fahrzeugs benötigt werden. Für die reine Fortbewegung würde auch ein angetriebenes Wagenelement und prinzipiell sogar nur ein angetriebenes Rad ausreichen. Durch die erfindungsgemäß vorliegenden wenigstens vier angetriebenen Räder (zwei auf jeder Seite des Knickgelenks) werden daher zusätzliche Antriebs-Freiheitsgrade zur Verfügung gestellt, welche erfindungsgemäß zu einer passiven Aktuierung des Knickgelenks genutzt werden. So kann das Knickgelenk durch die vier oder mehr Radantriebe passiv bewegt werden. In Summe können die vier oder mehr Radantriebe also dazu genutzt werden, nicht nur eine Vor- oder Rückwärtsbewegung des Fahrzeugs zu bewirken, sondern auch das Knickgelenk innerhalb des verfügbaren Knickwinkelbereichs passiv zu bewegen.

Ein Vorteil dieser erfindungsgemäßen Ausgestaltung ist, dass ein zusätzlicher Aktor für das Knickgelenk entfallen kann, und dass dadurch ein wesentlich einfacheres und weniger komplex aufgebautes Fahrzeug realisiert wird. Durch diese Einsparung des zusätzlichen Knickgelenk-Aktors kann der Gesamt-Wirkungsgrad des Fahrzeugs verbessert werden und unter Umständen auch eine geringere Fahrzeugmasse erreicht werden. Durch die Einsparung des zusätzlichen Stellantriebs kann weiterhin die Robustheit des Fahrzeugs erhöht sein, und die Wartungs- und Reparaturaufwände können vorteilhaft gering gehalten werden.

Vorteilhafte Ausgestaltungen und Weiterbildungen der Erfindung gehen aus den von Anspruch 1 abhängigen Ansprüchen sowie der folgenden Beschreibung hervor.

Gemäß einer allgemein vorteilhaften Ausführungsform kann das Fahrzeug zwischen den beiden angetriebenen Wagenelementen noch ein oder mehrere innenliegende Wagenelemente aufweisen, wobei die einzelnen Wagenelemente über eine Kette von Knickgelenken seriell miteinander verbunden sind. Mit anderen Worten kann das Fahrzeug ähnlich wie ein aus einzelnen Waggons bestehender Zug aus einer Vielzahl von hintereinandergeschalteten Wagenelementen zusammengesetzt sein, und die Verbindung kann jeweils durch Knickgelenke vermittelt sein. Dabei handelt es sich bei wenigstens zwei Wagenelementen um angetriebene Wagenelemente, und zwischen diesen beiden angetriebenen Wagenelementen befindet sich zumindest ein weiteres (angetriebenes oder antriebsloses) Wagenelement. Bei dieser Ausführungsform liegen also insgesamt wenigstens drei Wagenelemente und insgesamt wenigstens zwei verbindende Knickgelenke vor. Außerdem liegen zumindest vier angetriebene Räder vor, mit denen die äußeren Wagenelemente dieser Dreier-Kette angetrieben werden können. Durch diese vier separat antreibbaren Räder sind zumindest vier Bewegungsfreiheitsgrade gegeben. Zusätzlich zur reinen Vor- oder Rückwärtsbewegung können daher auch die beiden innenliegenden Knickgelenke passiv aktuiert werden. Ein solches Fahrzeug mit Doppel-Knickgelenk ist noch wesentlich wendiger und manövrierfähiger als ein Fahrzeug mit nur einem innenliegenden Knickgelenk. Insbesondere kann ein Fahrzeug mit zwei getrennten Knickgelenkten auch im sogenannten "Hundegang" bewegt werden. Dabei ermöglicht ein gegenläufiges Einlenken der beiden Knickgelenke zum Beispiel ein reines Querversetzen des Fahrzeugs. Alternativ kann das Fahrzeug aber auch katzenartig um sehr enge Hindernisse schlängeln. All dies wird durch die zusätzlichen Freiheitsgrade der einzelnen Radantriebe ohne eine zusätzliche Aktuierung der Knickgelenke ermöglicht.

Allgemein können nicht nur ein, sondern auch mehrere innenliegende Wagenelemente vorhanden sein, wobei die Anzahl der vorliegenden Knickgelenke dann ebenfalls entsprechend erhöht sein kann. Insgesamt können dann also k Knickgelenke vorliegen. Zweckmäßig ist dann die Anzahl r der separat antreibbaren Räder wenigstens um 1 höher als die Anzahl k. Wenn diese Beziehung erfüllt ist, dann werden durch die r Räder r Bewegungsfreiheitsgrade zur Verfügung gestellt, von denen einer der Vor- bzw. Rückwärtsbewegung entspricht und die übrigen zur passiven Aktuierung der k Knickgelenke verwendet werden.

Bei einer besonders vorteilhaften Ausführungsform liegt die Anzahl r der angetriebenen Räder sogar bei wenigstens dem Doppelten der Anzahl k der Knickgelenke. Bei dieser Ausführungsform besteht eine noch höhere Redundanz an verfügbaren Bewegungsfreiheitsgraden. Dies ermöglicht eine gewisse Ausfallsicherheit, so dass beispielsweise alle separaten Bewegungen (Knickbewegungen und Vor-/Rückbewegung) auch dann noch möglich sind, wenn einzelne Räder die Traktion verlieren oder aus sonstigen Gründen für den Antrieb ausfallen. Allgemein kann dabei jedes angetriebene Wagenelement zweispurig ausgebildet sein und entsprechend zwei separat antreibbare Räder aufweisen, so dass insgesamt ein symmetrisches und redundantes Antriebssystem gebildet ist.

Bei einer besonders einfachen und zweckmäßigen Ausführungsform eines solchen Fahrzeugs liegt genau ein innenliegendes Wagenelement vor, welches mit jedem der beiden angetriebenen Wagenelemente über ein zugeordnetes Knickgelenk verschwenkbar verbunden ist. Insbesondere kann dann das innenliegende Wagenelement antriebslos und besonders vorteilhaft radlos ausgebildet sein. Es ist nämlich nicht notwendig, dass das innenliegende Wagenelement über einen eigenen Antrieb verfügt, da bereits durch die vier Räder der beiden endständigen Wagenelemente genügend Bewegungsfreiheitsgrade für die Gesamtbewegung und die Steuerung der Knickgelenke zur Verfügung stehen. Somit kann ein vergleichsweise einfaches und robustes Fahrzeug realisiert werden. Wenn das innenliegende Wagenelement vergleichsweise schwer ist, kann es zwar prinzipiell durch ein oder mehrere passive Räder gestützt sein. Besonders einfach ist die Konstruktion jedoch, wenn das innenliegende Wagenelement von den benachbarten, angetriebenen Wagenelementen getragen wird und entsprechend ohne eigene Räder auskommt. Diese Variante ist vor allem dann vorteilhaft, wenn das innenliegende Wagenelement klein und leicht ist und vor allem der Bereitstellung des zusätzlichen Winkelfreiheitsgrades dient - mit anderen Worten, wenn hier keine schweren Maschinenteile angeordnet sind.

Allgemein vorteilhaft und unabhängig von Art und Anzahl der einzelnen Knickgelenke und Wagenelemente können die einzelnen Motoren als Radnabenmotoren ausgestaltet sein. Mit anderen Worten kann der Motor zusammen mit der Nabe des zugehörigen Rades in ein übergeordnetes Bauteil integriert sein. Der Motor kann also beispielsweise in das Rad mit eingebaut sein und gleichzeitig die Radnabe tragen. Eine solche enge Integration des Motors in das Rad ist eine besonders zweckmäßige Variante, um einen separaten Antrieb für das einzelne Rad zu ermöglichen und dabei insgesamt eine kompakte Ausgestaltung zu erreichen. Alternativ zur Verwendung von solchen Radnabenmotoren ist es aber prinzipiell auch möglich, dass die einzelnen Antriebsmotoren beispielsweise benachbart zu den jeweiligen Radnaben angeordnet sind und mit diesen über zugeordnete Motorwellen verbunden sind. Es sind auch noch weitere Ausführungsformen von separaten Antrieben denkbar. Wesentlich ist im Zusammenhang mit der vorliegenden Erfindung nur, dass die Räder unabhängig voneinander aktuiert werden können.

Bei einer weiteren allgemein vorteilhaften Ausführungsform sind die einzelnen Motoren jeweils als Elektromotoren ausgestaltet. Vor allem radnaben-nahe Elektromotoren ermöglichen eine besonders kompakte und effiziente Realisierung dieser separaten Antriebe. Zusätzlich weisen Elektromotoren noch eine Reihe weiterer Vorteile auf, beispielsweise können sie in explosionsgeschützten Umgebungen eingesetzt werden, verursachen geringere Emissionen am Einsatzort, sind leiser, häufig auch wartungsärmer und liefern ein wesentlich gleichmäßiges Drehmoment bei unterschiedlichen Drehzahlen als ein Verbrennungsmotor. Um all diese Vorteile bestmöglich zu nutzen, kann es sich bei dem Fahrzeug besonders vorteilhaft um ein rein elektrisch angetriebenes Fahrzeug handeln. Prinzipiell lassen sich die Vorteile des erfindungsgemäßen Konzepts aber auch mit anderen Arten von Antrieben und insbesondere auch mit separaten Verbrennungsmotoren erzielen. Oder es können zusätzlich zu den beschriebenen Elektromotoren auch noch optionale weitere Antriebsmotoren vorhanden sein.

Weiterhin ist es allgemein vorteilhaft, wenn die einzelnen Knickgelenke als passive Gelenke ausgebildet sind. Mit anderen Worten haben die Knickgelenke dann keinen separaten aktiven Gelenkantrieb, also insbesondere keinen hydraulischen Stellantrieb und auch keinen sonstigen mechanischen oder elektrischen Gelenkantrieb, mit dem das Knickgelenk zusätzlich aktuiert wird. Vielmehr stellt sich der Gelenkwinkel des jeweiligen Knickgelenks aufgrund der Drehmomente in den einzelnen Radantrieben passiv ein.

Gemäß einer vorteilhaften Ausführungsform kann das Fahrzeug als fahrerloses Transportfahrzeug ausgebildet sein. Besonders vorteilhaft kann es sich dabei um ein autonom fahrfähiges Fahrzeug handeln, insbesondere ein sogenanntes AGV (für englisch: "Automated Guided Vehicle"). Vor allem im Bereich solcher autonomen Fahrzeuge, welche ohne die Interaktion eines menschlichen Benutzers betrieben werden können, kommen die Vorteile der Erfindung in Bezug auf die gute Manövrierfähigkeit in Kombination mit einer einfachen, robusten Konstruktion und einem geringen Wartungsaufwand besonders wirksam zum Tragen. Grundsätzlich können die Vorteile der Erfindung aber auch in einem fahrerbetriebenen oder ferngesteuerten Fahrzeug zum Einsatz kommen.

Allgemein kann das Fahrzeug bevorzugt als Nutzfahrzeug ausgestaltet sein. Beispielsweise kann es sich um einen Lastkraftwagen, einen Hubstapler, einen Muldenkipper, einen Kranwagen, eine fahrbare Baumaschine, einen Traktor und/oder ein Untertage-Fahrzeug handeln. Bei derartigen Nutzfahrzeugen kommen die Vorteile besonders zum Tragen, da es hier häufig auf eine sehr gute Manövrierfähigkeit ankommt.

Gemäß einer allgemein bevorzugten Ausführungsform können die einzelnen Motoren so ausgestaltet sein, dass sie an dem jeweils zugeordneten Rad ein Drehmoment von wenigstens 10 Nm bewirken können. Besonders vorteilhaft liegt das jeweils erreichbare Drehmoment sogar bei wenigstens 30 Nm. Die Gesamtleistung des Fahrzeugs kann oberhalb von 100 kW liegen, und die nominale Zuladung kann bei wenigstens 100 kg liegen. Dieser Drehmoment-, Leistungs- bzw. Lastbereich ist insbesondere mit verfügbaren elektrischen Radantrieben problemlos abzudecken, und es kann somit ein wendiges und gleichzeitig robustes Nutzfahrzeug zur Verfügung gestellt werden.

Gemäß einer vorteilhaften Ausführungsform für die Geometrie der einzelnen Wagenelemente beträgt ihre Breite b wenigstens ein Fünftel der Länge des jeweiligen Wagenelements. Besonders vorteilhaft beträgt die Wagenbreite sogar wenigstens die Hälfte der jeweiligen Wagenlänge. Mit anderen Worten liegt die Wagenbreite in einer ähnlichen Größenordnung wie die Wagenlänge, und eine allzu stark langgestreckte Form wird vermieden, wodurch insgesamt mit den (ein oder mehreren) vorliegenden Knickgelenken die erwünschte hohe Wendigkeit des Gesamtfahrzeugs erreicht wird.

Weiterhin ist es allgemein vorteilhaft, wenn durch das jeweilige Knickgelenk ein Knickwinkel zwischen den verbundenen Wagenelementen von wenigstens 20° und insbesondere sogar wenigstens 45° erreichbar ist. Dabei ist der Knickwinkel allgemein als der Winkel definiert, um den die beiden verbundenen Wagenelemente aus einer kollinearen Ausrichtung heraus gegeneinander verschwenkt sind. Mit einem Knickwinkel von 20° kann bereits eine sehr gute Manövrierfähigkeit des Gesamt-Fahrzeugs erreicht werden. Mit einem Knickwinkel von 45° kann eine extrem gute Wendigkeit erreicht werden.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Aufsicht eines Fahrzeugs nach einem ersten Beispiel der Erfindung zeigt und
- Figuren 2 bis 4: schematische Aufsichten von Fahrzeugen nach weiteren Ausführungsbeispielen zeigen.

In den Figuren sind gleiche oder funktionsgleiche Elemente mit gleichen Bezugszeichen versehen.

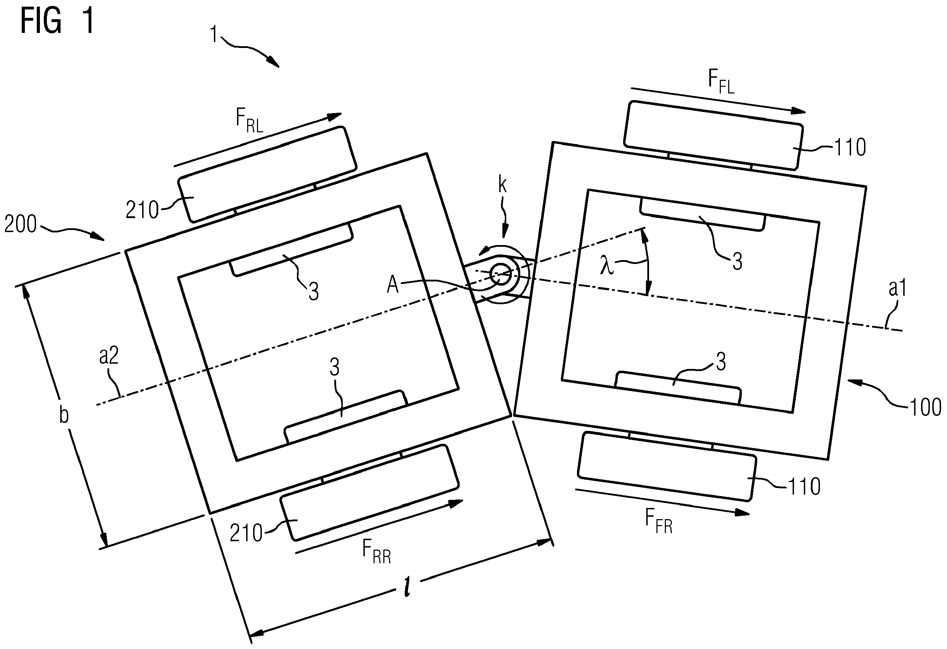

In Figur 1 ist eine schematische perspektivische Aufsicht eines Fahrzeugs 1 nach einem ersten Beispiel der Erfindung gezeigt. Gezeigt ist eine Sicht, die von vertikal oben in etwa auf die Haupt-Fortbewegungsebene des Fahrzeugs 1 blickt. Das Fahrzeug 1 umfasst zwei angetriebene Wagenelemente 100 und 200, zwischen denen ein Knickgelenk k angeordnet ist. Durch dieses Knickgelenk k sind die beiden Wagenelemente 100 und 200 um die im Wesentlichen vertikal im Raum stehende Knickachse A gegeneinander verschwenkbar. Das erste Wagenelement 100 weist eine Längsachse a1 auf, und das zweite Wagenelement 200 weist eine Längsachse a2 auf. In einem ungeknickten Ausgangszustand des Fahrzeugs würden diese beiden Längsachsen a1 und a2 kollinear aufeinanderliegen. Im hier dargestellten Zustand sind dagegen die beiden Wagenelemente 100 und 200 um das Knickgelenk k verschwenkt, so dass ein von Null verschiedener Knickwinkel l zwischen den beiden Längsachsen a1 und a2 ausgebildet ist.

Jedes der beiden Wagenelemente 100 und 200 weist zwei Räder auf, wobei die beiden Räder des ersten (vorderen) Wagenelements mit 110 und die Räder des zweiten (hinteren) Wagenelements mit 210 bezeichnet sind. Beide Wagenelemente 100 und 200 sind als zweispurige Wagenelemente ausgebildet, bei denen die beiden Räder bezüglich der Haupt-Fortbewegungsrichtung nebeneinander angeordnet sind. Bei allen vier Rädern handelt es sich um separat angetriebene Räder. Hierzu ist im Bereich jedes Rades 110 bzw. 210 ein zugeordneter Motor 3 angeordnet. Diese Rotoren können beispielsweise als Elektromotoren und insbesondere als elektrische Radnabenmotoren ausgestaltet sein.

Das zwischen den beiden Wagenelementen liegende Knickgelenk ist nicht separat aktuiert, sondern ist als passives Gelenk ausgebildet. Entsprechend wird es nur durch die von den vier Motoren 3 bewirkten Drehmomente passiv gelenkt. In jedem der vier Räder kann durch den zugeordneten Motor ein Drehmoment separat eingestellt werden. Hierdurch wirkt im Bereich jedes Rades eine Vortriebskraft auf das zugehörige Wagenelement 100 bzw. 200. Diese Kraft ist beim vorderen linken Rad mit F_{FL}, beim vorderen rechten Rad mit F_{FR}, beim hinteren linken Rad mit F_{RL} und beim hinteren rechten Rad mit F_{RR} bezeichnet. Durch diese vier unabhängig einstellbaren Drehmomente und die vier daraus resultierenden Vortriebskräfte sind vier unabhängige Bewegungsfreiheitsgrade eröffnet. Unter Berücksichtigung der Masse des Fahrzeugs, des Trägheitsmoments für die relative Knickbewegung sowie gegebenenfalls von Reibungseffekten ergibt sich aus diesen vier einwirkenden Kräften F_{FL}, F_{FR}, F_{RL} und F_{RR} nicht nur eine Beschleunigung des gesamten Fahrzeugs in Vorwärtsrichtung, sondern auch eine Winkelbeschleunigung bezüglich der Verschwenkung um die Knickachse A. Abhängig von der jeweils vorhergehenden Fahrsituation ergibt sich daraus gegebenenfalls eine Änderung des Knickwinkels l, so dass das Knickgelenk k mit Hilfe der vier radnahen Motoren 3 passiv gesteuert werden kann.

Die Abmessungen in der Figur 1 sind nicht maßstabsgetreu, und die dargestellten Proportionen sind nur schematisch zu verstehen. So kann vorteilhaft auch ein deutlich größerer Knickwinkel l erreicht werden als hier dargestellt ist, um ein besonders wendiges Fahrzeug zur Verfügung zu stellen. Auch die Breite b und die Länge l der einzelnen Wagenelemente können anders als hier gezeigt dimensioniert sein. Vorteilhaft ist es aber, wenn die einzelnen Wagenelemente nicht zu stark langgestreckt sind, um ein besonders wendiges und gut manövrierfähiges Fahrzeug zu erhalten. So kann die Länge l insbesondere niedriger als das Fünffache der Wagenbreite b sein.

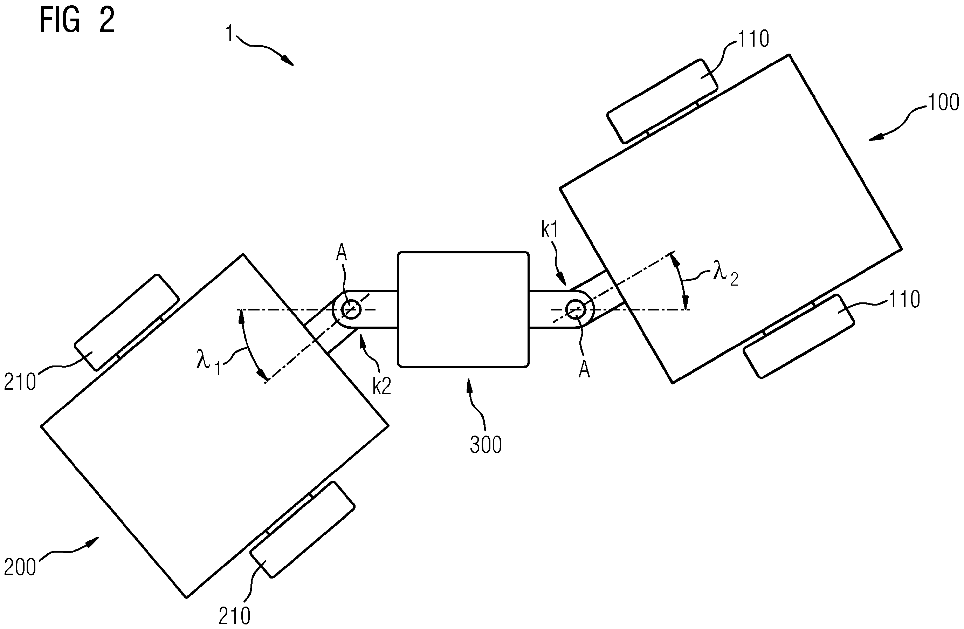

Figur 2 zeigt ein Fahrzeug 1 nach einem zweiten Beispiel der Erfindung in schematischer Aufsicht. Auch dieses Fahrzeug 1 umfasst zwei endständige, angetriebene Wagenelemente 100, 200 welche jeweils ähnlich ausgebildet sind wie beim Beispiel der Figur 1 und ebenfalls jeweils zwei nebeneinanderliegende, separat angetriebene Räder 110 bzw. 210 aufweisen. Zwischen diesen beiden angetriebenen Wagenelementen 100 und 200 befindet sich hier ein weiteres, innenliegendes Wagenelement 300. Dieses ist mit den benachbarten Wagenelementen jeweils über ein zugeordnetes Knickgelenk k1 bzw. k2 verbunden, so dass hier insgesamt zwei Knickgelenke vorliegen. Ansonsten ist die Funktion der einzelnen Knickgelenke ähnlich wie beim Beispiel der Figur 1.

Das innenliegende Wagenelement 300 weist keine Räder und entsprechend keinen eigenen Antrieb auf. Es wird nur zusammen mit den passiv bewegten Knickgelenken k1 und k2 aufgrund der Antriebe der Wagenelemente 100 und 200 mitbewegt. Durch die vier separat angetriebenen Räder 110 und 210 sind auch hier genügend unabhängige Bewegungsfreiheitsgrade vorhanden, um neben der Vorwärtsbewegung auch eine Steuerung der beiden Knickgelenke k1 und k2 zu bewirken. Das Fahrzeug der Figur 2 kann durch diese beiden Knickgelenke auf besonders engem Raum manövriert werden und ist trotzdem einfach aufgebaut und robust.

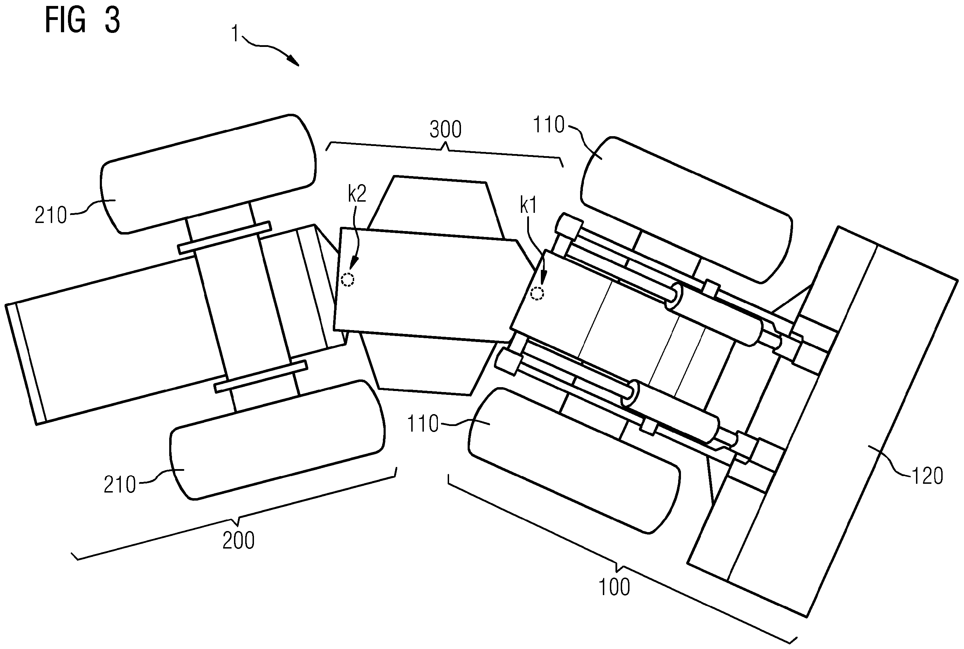

Die Ausgestaltungen der beiden Fahrzeuge der Figuren 1 und 2 sind nur schematisch zu verstehen und sollen vor allem das Lenkprinzip verdeutlichen. Nützliche Anwendungen dieses Betriebs können zum Beispiel im Bereich der Nutzfahrzeuge liegen, wie durch das Ausführungsbeispiel der Figur 3 illustriert werden soll. Bei dem hier dargestellten Fahrzeug 1 handelt es sich um einen Radlader mit zwei Knickgelenken, der an seinem ersten (vorderen) Wagenelement 100 entsprechend eine Schaufel 120 aufweist. Auch hier liegt ein inneres Wagenelement 300 vor, welches mit den beiden angetriebenen Wagenelementen 100 und 200 über zwei Knickgelenke verbunden ist. Insoweit ist das Fahrzeug ähnlich aufgebaut wie der Radlader "Trojan 8000", der früher von der Firma Yale & Towne angeboten wurde. Im Unterschied zu diesem bekannten Radlader sind aber bei dem dargestellten Fahrzeug sowohl das erste (vordere) Wagenelement 100 als auch das zweite (hintere) Wagenelement jeweils mit zwei separat angetriebenen Rädern 110 bzw. 210 versehen, die auch hier insbesondere durch elektrische Radnabenmotoren angetrieben sein können. Hierdurch kann eine separate Aktuierung der beiden Knickgelenke k1,k2 durch einen zusätzlichen hydraulischen Stellantrieb eingespart werden. Im Vergleich zu dem aus dem Stand der Technik bekannten Radlader ist das erfindungsgemäße Fahrzeug somit robuster und weniger fehleranfällig. Ein weiterer Unterschied zu dem bekannten Radlader liegt darin, dass das Fahrzeug der Figur 3 eine autonom fahrfähige Baumaschine ist. Entsprechend weist sie keine Fahrerkabine auf, sondern sie kann durch eine hier nicht dargestellte Steuereinheit autonom betrieben werden. Insbesondere ist sie ohne einen menschlichen Benutzer fahrfähig und einsatzfähig.

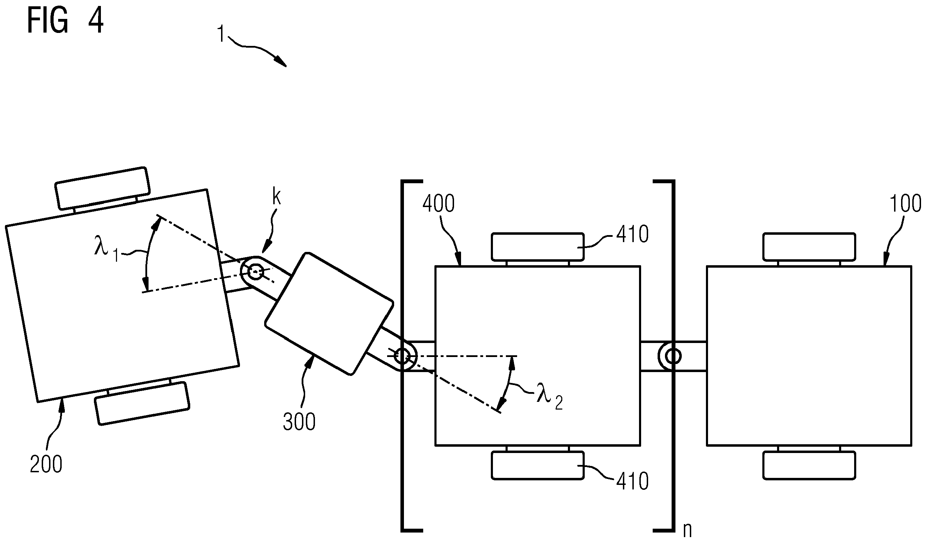

Figur 4 zeigt ein Fahrzeug 1 nach einem vierten Beispiel der Erfindung. Auch hier ist eine schematische Prinzipskizze als Aufsicht auf das Fahrzeug gezeigt. Das Fahrzeug ist insgesamt ähnlich ausgebildet wie beim Beispiel der Figur 2, insbesondere können die beiden endständigen Wagenelemente 100 und 200 sowie das innenliegende, antriebslose Wagenelement 300 im Wesentlichen die gleichen Eigenschaften aufweisen. Im Unterschied zum Beispiel der Figur 2 sind hier aber zwischen dem nicht angetriebenen innenliegenden Wagenelement 300 und dem vorderen Wagenelement 100 noch optional n weitere Wagenelemente 400 vorgesehen. Wenn n gleich Null ist, dann entspricht dieses Beispiel also dem der Figur 2. Wenn der Wert von n jedoch bei 1, 2, 3 oder noch höher liegt, dann wird dadurch insgesamt eine längere Kette von Wagenelementen gebildet, wobei die benachbarten Wagenelemente jeweils durch hier nicht explizit bezeichnete Knickgelenke verbunden sind. Beim Beispiel der Figur 4 sind n weitere angetriebene Wagenelemente 400 gezeigt, welche jeweils wiederum mit zwei separat angetriebenen Rädern 410 ausgestattet sein können. Alternativ dazu können aber auch zumindest Teile dieser zusätzlichen inneren Wagenelemente als nicht angetriebene Wagenelemente ausgestaltet sein, analog wie das Wagenelement 300. Insgesamt ist bei dieser Ausführungsform ein besonders gut manövrierfähiges längliches Fahrzeug gebildet, welches sich ähnlich wie ein Hundertfüßler flexibel um sehr enge Hindernisse winden kann.

### Bezugszeichenliste

- 1: Fahrzeug
- 3: Motor
- 100: erstes angetriebenes Wagenelement
- 110: Rad am ersten Wagenelement
- 120: Schaufel
- 200: zweites angetriebenes Wagenelement
- 210: Rad am zweiten Wagenelement
- 300: innenliegendes Wagenelement
- 400: angetriebenes innenliegendes Wagenelement
- 410: Rad am Wagenelement 400
- A: Knickachse
- a1: Längsachse des Wagenelements 100
- a2: Längsachse des Wagenelements 200
- b: Breite des Wagenelements
- F_{FL}: Kraft (vorne links)
- F_{FR}: Kraft (vorne rechts)
- F_{RL}: Kraft (hinten links)
- F_{RR}: Kraft (hinten rechts)
- k: Knickgelenk
- k1: erstes Knickgelenk
- k2: zweites Knickgelenk
- l: Länge des Wagenelements
- λ: Knickwinkel

## Patentansprüche

1. Fahrzeug (1) mit wenigstens zwei angetriebenen Wagenelementen (100,200), welche durch wenigstens ein Knickgelenk (k) verschwenkbar miteinander verbunden sind,
- wobei diese beiden angetriebenen Wagenelemente (100,200) jeweils wenigstens zwei Räder (110,210) aufweisen, welche jeweils durch einen zugeordneten Motor (3) separat antreibbar sind.

2. Fahrzeug (1) nach Anspruch 1, welches zwischen den beiden angetriebenen Wagenelementen (100,200) ein oder mehrere innenliegende Wagenelemente (300,400) aufweist,
wobei die einzelnen Wagenelemente (100,200,300,400) über eine Kette von Knickgelenken (k1, k2) seriell miteinander verbunden sind.

3. Fahrzeug (1) nach einem der Ansprüche 1 oder 2, bei welchem k die Gesamtzahl der vorhandenen Knickgelenke (k,k1,k2) ist und r die Gesamtzahl der separat antreibbaren Räder (110,210,410) ist, wobei der Wert von r wenigstens bei k+1 liegt.

4. Fahrzeug (1) nach Anspruch 3, bei welchem der Wert von r wenigstens bei 2*k liegt.

5. Fahrzeug (1) nach einem der Ansprüche 2 bis 4, welches genau ein innenliegendes Wagenelement (300) aufweist, welches mit jedem der beiden angetriebenen Wagenelemente (100,200) über ein zugeordnetes Knickgelenk (k1,k2) verschwenkbar verbunden ist.
- wobei das innenliegende Wagenelement (300) antriebslos und insbesondere radlos ausgebildet ist.

6. Fahrzeug (1) nach einem der Ansprüche 2 bis 4, welches zwischen den beiden angetriebenen Wagenelementen (100,200) mehrere innenliegende Wagenelemente (300,400) aufweist, welche zum Teil (400) angetrieben und zum Teil (300) antriebslos und insbesondere radlos ausgebildet sind.

7. Fahrzeug (1) nach einem der vorhergehenden Ansprüche, bei welchem die Motoren (3) als Radnabenmotoren ausgestaltet sind.

8. Fahrzeug (1) nach einem der vorhergehenden Ansprüche, bei welchem die Motoren (3) als Elektromotoren ausgestaltet sind.

9. Fahrzeug (1) nach einem der vorhergehenden Ansprüche, bei welchem die einzelnen Knickgelenke (k, k1, k2)als passive Gelenke ausgebildet sind.

10. Fahrzeug (1) nach einem der vorhergehenden Ansprüche, welches als fahrerloses Transportfahrzeug ausgebildet ist.

11. Fahrzeug (1) nach einem der vorhergehenden Ansprüche, welches als Nutzfahrzeug ausgestaltet ist.

12. Fahrzeug (1) nach Anspruch 11, welches als Lastkraftwagen, als Hubstapler, als Muldenkipper, als Kranwagen, als fahrbare Baumaschine, als Traktor und/oder als Untertage-Fahrzeug ausgestaltet ist.

13. Fahrzeug (1) nach einem der vorhergehenden Ansprüche, bei welchem die einzelnen Motoren (3) an dem jeweils zugeordneten Rad (110,210,410) ein Drehmoment von wenigstens 10 Nm bewirken können.

14. Fahrzeug (1) nach einem der vorhergehenden Ansprüche, bei welchem die Breite (b) der einzelnen Wagenelemente (100,200,300,400) wenigstens 1/5 der Länge (1) des jeweiligen Wagenelements beträgt.

15. Fahrzeug (1) nach einem der vorhergehenden Ansprüche, bei welchem durch das jeweilige Knickgelenk (k, k1, k2)ein Knickwinkel zwischen den verbundenen Wagenelementen (100,200,300,400) von wenigstens 20° erreichbar ist.
